# EUROPEAN PATENT SPECIFICATION

(11) **EP 0 478 273 B1**
(45) Date of publication and mention of the grant of the patent: **07.01.1998**
(21) Application number: 91308674.0
(22) Date of filing: 24.09.1991
(51) Int. Cl.: F16F 9/53, F16F 9/10, F16F 13/00

(54) **Vibration damping device**
Schwingungsdämpfungsvorrichtung
Dispositif pour amortissement de vibrations

(30) Priority: 25.09.1990 JP 251798/90; 06.02.1991 JP 35145/91
(43) Date of publication of application: 01.04.1992
(73) Proprietor: Bridgestone Corporation, Tokyo 104 (JP)
(72) Inventor: Kawamata, Satoru, Higashimurayama City, Tokyo (JP); Watanabe, Isao, Iruma City, Saitama Pref. (JP); Ohno, Kiyoshi, Kodaira City, Tokyo (JP)
(74) Representative: Whalley, Kevin

(56) References cited:
- EP-A- 0 298 266
- EP-A- 0 300 445
- EP-A- 0 414 508
- FR-A- 2 579 283
- US-A- 1 729 565
- PATENT ABSTRACTS OF JAPAN vol. 4, no. 161 (M-40)(643) 11 November 1980 & JP-A-55 112 440(TOKYO SHIBAURA DENKI K.K.) 30 August 1980
- PATENT ABSTRACTS OF JAPAN vol. 9, no. 223 (M-411)(1946) 10 September 1985 & JP-A-60 081 529(BRIDGESTONE K.K.) 9 May 1985

## Description

This invention relates to a vibration damping device suitable for use in automobile suspension systems and the like and capable of developing a high vibration damping performance.

For example, as this type of the device used for automobile suspension systems developing vibration damping performances, some of the inventors have already proposed a vibration damping device in EP-A-0414508 filed on August 21, 1990 in order to solve problems inherent to the well-known shock absorber.

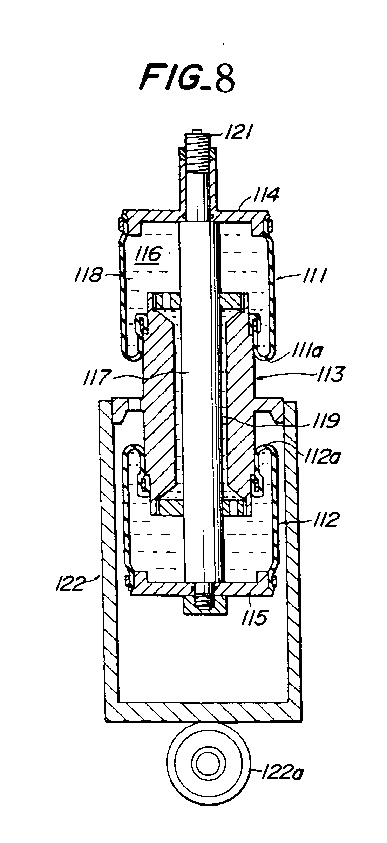

In such a device, as shown by a longitudinal section view in Fig. 8 of the accompanying drawings, an end portion of each of two cylindrical and flexible membrane members 111, 112 is liquid-tightly connected to respective end portions of a restricted passage constituting member 113 being substantially cylindrical as a whole, while the other end portions of these membrane members 111, 112 are liquid-tightly connected to face plates 114, 115, respectively, whereby a closed chamber 116 is formed in such a manner that folded portions 111a, 112a of these membrane members 111, 112 face each other. The face plates 114, 115 are connected to each other through a rod-like rigid member 117 inside the closed chamber 116. In the closed chamber 116, water 118 is filled, for example inside these membrane members 111, 112 and in a restricted passage 119 formed substantially along the full length of the restricted passage constituting member 113. Furthermore, fastening members 121, 122 are arranged on the face plate 114 and the restricted passage constituting member 113, respectively. The vibration damping device of this structure can be used, for example, by connecting the male screw-shaped fastening member 121 arranged on the face plate 114 to a body frame of a vehicle through a rubber bush and also connecting a cup-shaped fastening member 122 arranged on an outward flange of the restricted passage constituting member 113 to a lower arm of the vehicle through an eye hook 122a.

When vibrations are input to either side of the face plate and the restricted passage constituting member in such a device, the face plates 114, 115 are relatively displaced to the restricted passage constituting member 113 under the flowing of water 118 in the restricted passage 119, whereby vibrations can effectively be damped. Further, when the input vibration is a high frequency microvibration, the cylindrical and flexible membrane members 111, 112 are deformed to absorb volume change inside these membrane members, whereby the high frequency microvibration can effectively be isolated.

However, in order to create a large vibration damping force by such a device, it is required to make the sectional area of the restricted passage 119 small because the length of the restricted passage 119 is naturally restricted by the length of the restricted passage constituting member 113. As a result, there is caused a problem that the danger of contacting the structural members with each other becomes high.

Furthermore, there has been proposed a modification of the above device in which an electrorheological fluid is filled in the closed chamber 116 instead of water 118 and the rod-like rigid member 117 and the restricted passage constituting member 113 act as positive electrode and negative electrode, respectively, to cause a magnification of damping force in accordance with the intensity of electric field applied. In this case, it is preferably that if the vibration damping force is not required, it approaches to zero as far as possible, while if the vibration damping force is required, it is made as large as possible. However, in order to ensure an occurrence of large vibration damping force, there is a problem that when the length of the restricted passage 119 is made long to reduce the sectional area of the passage, the damping force becomes unpractically large even in the absence of electrical field.

Attention is also drawn to the disclosure of US-A-1729565, which describes a vibration damping device comprising two rubber chambers (7,14), an end portion of each of which chambers being liquid-tightly connected to respective end portions of a fitting (11) and the other end portions of which chambers being liquid-tightly connected to respective rings (16,35), a stem (3) provided therein with a passage (36) and connecting the rings (16,35) to each other to form a closed chamber such that portions of the chambers face each other, a liquid such as oil filled in the closed chamber, and a bolt (34) arranged to secure the fitting (11) to a frame (1). This document discloses a vibration damping device comprising two cylindrical and flexible membrane members, an end portion of each of which membrane members being liquid-tightly connected to respective end portions of a piston member and the other end portions of which members being liquid-tightly connected to respective face plates, a connecting member provided therein with at least one restricted passage and connecting the face plates to each other to form a closed chamber such that folded portions of the membrane members face each other, and fastening members arranged on the piston member and one of said face plates, respectively.

It is, therefore, an aim of the present invention to provide a vibration damping device which satisfactorily overcomes the above problems.

This is achieved by a vibration damping device further comprising an electrorheological fluid filled in the closed chamber and electrodes comprised by opposed walls of the restricted passage.

In one preferred embodiment of the invention, the connecting member is provided therein with a plurality of restricted passages, and the electrodes are comprised by opposed walls of each of the restricted passages.

The connecting member for connecting the face plates to each other may be suitably arranged so as to pass through the piston member.

The invention will be further described, by way of example only, with reference to the accompanying drawings, wherein:
Figs. 1a and 1b are respectively longitudinal and lateral section views of an embodiment of a vibration damping device, which is not however according to the present invention, because it does not utilize an electrorheological fluid in the closed chamber thereof;
Fig. 2 is a longitudinal section view showing the application of electrorheological fluid to the device shown in Fig. 1 to thus provide a first embodiment of a vibration damping device according to the present invention;
Figs. 3a to 3c are schematically sectional views of the main part of the device of Fig. 2 showing various structures of insulative material, respectively;
Fig. 4 is a longitudinal section view of a second embodiment of a vibration damping device according to the invention;
Figs. 5a to 5d are lateral section views showing various embodiments of the restricted passage, respectively;
Figs. 6a to 6b are schematically sectional views of the main part of the device of Fig. 4 showing various structures of insulative material respectively;
Fig. 7a is a modified embodiment of the device of Fig. 4 and Figs. 7b to 7d are lateral section views of the device of Fig. 7a showing various embodiments of the restricted passage, respectively; and
Fig. 8 is a schematically longitudinal section view of a vibration damping device of the prior art.

In the device according to the invention, the vibration damping force is created by the flowing of the liquid through the restricted passage arranged in the connecting member for connecting the face plates to each other. Furthermore, the length of the restricted passage can be lengthened as compared with that of the previously proposed device of EP-A-0414508, and also the danger of contacting the structural parts with each other can be completely removed even when the sectional area of the restricted passage is made sufficiently small, whereby an excellent vibration damping performance can always be developed.

When vibrations are transmitted, for example, to the side of the face plate when mounting the device onto a vehicle or the like, if they are high frequency microvibrations, the slight change of volume inside the cylindrical and flexible membrane member due to the deformation inherent to the membrane member, particularly its elastic deformation, can be sufficiently absorbed under a small deformation resistance, so that high frequency microvibration can effectively be isolated from the piston member.

On the other hand, when the transmitted vibration is relatively large in amplitude, the connecting member for connecting both the face plates to each other can be sufficiently smoothly and effectively displaced relative to the piston member under a small deformation resistance , whereby the internal pressure of one of the two membrane members is reduced and the internal pressure of the other membrane member is increased by an amount corresponding to the above reduced amount in accordance with the relative displacement of the connecting member, so that the fluid filled in the closed chamber flows from the high pressure side toward the low pressure side through the restricted passage and consequently excellent vibration damping performance is always obtained irrespective of the magnification of vibration force.

Since the folded portions of the two cylindrical and flexible membrane members are positioned so as to face each other, the acceptable amount of relative displacement between the piston member and the connecting member can be sufficiently increased under the action of a long restricted passage as compared with the case that the folded portions are separated far away from each other (as disclosed, for example, in Japanese patent laid open No. 60-81529), whereby the development of higher vibration damping performance can be ensured.

In the invention, electrorheological fluid is used as a filled liquid and can be passed through plural restricted passages formed in the connecting member, whereby the total sectional area of the restricted passages becomes considerably large as compared with that of the previously proposed device of EP-A-0414508 even when the length of each of the restricted passages is longer than that of the proposed device, so that when an electrical field is absent in the restricted passages, the electrorheological fluid can smoothly flow in the restricted passages under a small flowing resistance and consequently the vibration damping force can be considerably decreased.

On the contrary, when an electrical field is created in the restricted passages by the action of electrodes comprised by the opposed walls of each of the restricted passages, the viscosity of the electrorheological fluid is increased in accordance with the intensity of the electrical field over the full length of each restricted passage, so that the desired large vibration damping force can be produced in each of the restricted passages likewise the case that the total length of the restricted passages is made long and hence the damping force can be made sufficiently large.

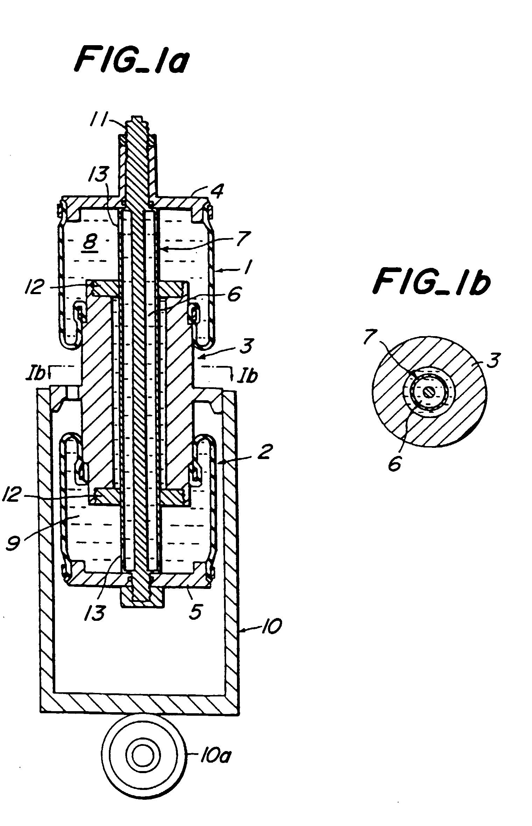

In Figs. 1a and 1b is longitudinally and laterally shown a section of a first embodiment of a vibration damping device, wherein numerals 1, 2 are cylindrical and flexible membrane members, respectively and numeral 3 a piston member liquid-tightly connecting an end portion of each of these membrane members 1, 2.

The other end portions of these membrane members 1, 2 are liquid-tightly connected to respective face plates 4, 5 in the same manner as described in the previously proposed device of EP-A-0414508, while these face plates 4, 5 are connected to each other through a connecting member 7 provided with a restricted passage 6 having a given sectional area. Thus, a closed chamber 8 is formed such that folded portions of these membrane members 1, 2 face each other. A liquid 9 such as water or anti-freeze is filled in the closed chamber, and further a cup-shaped fastening member 10 is arranged on the outer face of the piston member 10 through an outward flange and a fastening member 11 is arranged on one of the face plates 4.

In this case, the cup-shaped fastening member 10 arranged on the piston member 3 is provided at its outer bottom face with an eye hook 10a, and the other fastening member 11 has a male screw portion integrally united with the connecting member 7.

In order to make the device as compact as possible, the connecting member 7 is arranged inside the closed chamber 8 by passing through the piston member 3 as shown in Fig. 1a. In the latter case, the sliding movement of the connecting member 7 with respect to the piston member 3 is guided through guide members 12 attached to upper and lower end portions of the piston member 3, whereby the movement of the connecting member can be smoothened and also contact between the connecting member 7 and the piston member 3 can be prevented.

Moreover, it is not required to liquid-tightly seal the gap between the guide member 12 and the connecting member 7, and hence close fitting between these members can be avoided, so that it is possible to move the connecting member 7 by means of a small force.

Although the shape of the restricted passage 6 in the connecting member is cylindrical for producing a given sectional area, the shape may be alternatively a rectangular cylinder or other proper profile cylindrical shapes, if necessary. In any case, the restricted passage 6 is opened to the inside of each of the membrane members 1, 2 through holes 13 formed in upper and lower end portions of the connecting member 7, whereby the flowing of the liquid 9 filled in the closed chamber 8 into the restricted passage 6 is ensured.

According to the vibration damping device of the above structure, the length of the restricted passage 6 can be made longer than that of the previously proposed device, and also the the danger of contacting the members with each other can be completely removed even when the sectional area of the passage is a given small value, whereby the vibration damping performance of the device can be improved without any disadvantage. Furthermore, even when vibrations input to the side of the face plate or the piston member in this device are high frequency microvibrations, they are effectively isolated by the same action as in the previously proposed device and can very effectively be damped.

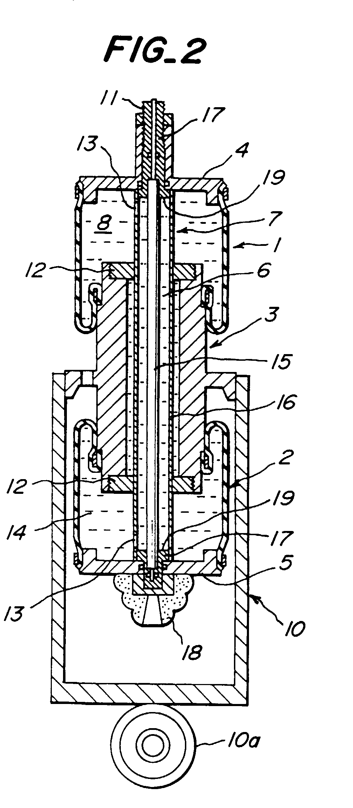

In the device of Fig. 1, an electrorheological fluid may be used instead of the liquid 9. In this case, as shown in Fig. 2, an electrorheological fluid 14 is filled in the closed chamber 8, while the whole of the core portion of the connecting member 7 acts as a positive electrode 15 and the whole of the sheath portion thereof acts as a negative electrode 16 and these electrodes 15, 16 are isolated by an insulative material 17 such as synthetic resin, ceramic or the like arranged therebetween.

As shown in Fig. 2, the end face of the negative electrode 16 comes into contact with each of the face plates 4, 5 usually made from a metallic material, so that the positive electrode 15 is also isolated from the face plates 4, 5 through the insulative material 17.

Further, a portion of the connecting member 7 around the face plate 5 is covered with a stopper 18 preferably made from an elastic material in order to protect the collision of such a portion with the cup-shaped fastening member 10.

In the vibration damping device of Fig. 2, when an electrical field is absent between these electrodes, the same vibration damping performance as in the device of Fig. 1 can be developed. Further, when an electrical field is generated between the electrodes, the viscosity of the electrorheological fluid 14 is increased in accordance with the intensity of the electrical field, so that a given large vibration damping force can be developed by selecting the intensity of the electrical field.

In this device, in order to further increase the vibration damping force in the presence of the electrical field, it is possible to increase the voltage applied between the electrodes 15, 16 or to narrow the distance between the electrodes to increase the intensity of electrical field. According to the latter case, a danger of causing electric discharge at a contact face between the insulative material 17 and the electrorheological fluid 14 becomes high, or there is a danger that air incorporated in the filling of the electrorheological fluid is retained between the upper insulative material 17 and the electrorheological fluid 14 to cause electric discharge.

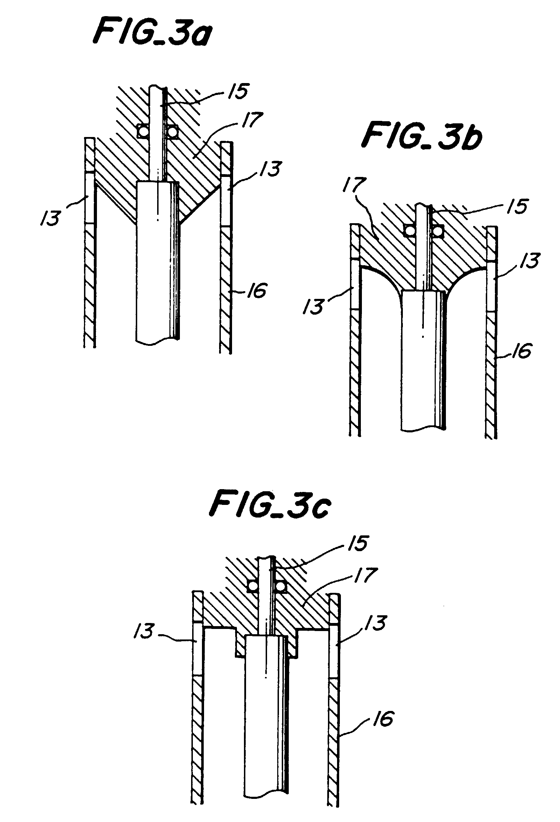

For this end, if it is required to narrow the distance between the electrodes, as shown with respect to a main part of the upper insulative material in Figs. 3a to 3c, the central portion of the insulative material 17 is protruded downward in form of a straight, a curve or a step, whereby the distance of the surface of the insulative material contacting with the electrorheological fluid 14 from the positive electrode 15 or the negative electrode 16 is made sufficiently long to effectively prevent electric discharge along the surface of the insulative material. At the same time, the upper edge of the hole 13 formed in the negative electrode 16 is positioned at the same level as the contact edge position of the insulative material 17 or upward at a level higher than the said level to ensure smooth discharge of air incorporated in the restricted passage toward the outside of the passage, whereby the occurrence of electric discharge phenomenon through an air layer is advantageously prevented.

Although the structure of the insulative material has been described with respect to the upper insulative material 17, the lower insulative material may be also constituted in the same manner as described above, whereby electric discharge can more effectively be prevented.

Moreover, the central portion of the insulative material 17 may naturally take a proper protruded shape other than the above illustrated shapes, and also the above structure of the insulative material 17 may be applied to devices having a relatively wide distance between electrodes.

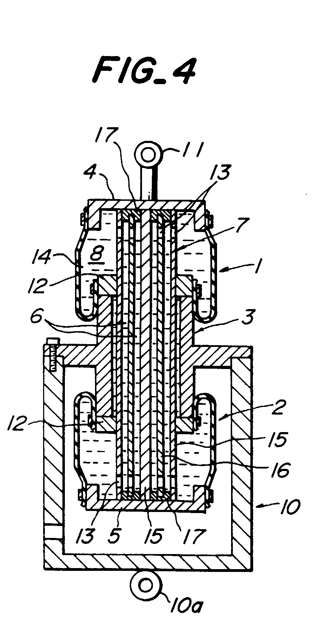

Fig. 4 is a longitudinal section of a second embodiment of a vibration damping device according to the invention. In this device, the electrorheological fluid 14 is filled in the closed chamber 8, while plural restricted passages, two restricted passages 6 in the illustrated embodiment,are formed in the connecting member 7 connecting both face plates 4, 5 to each other and the full opposed walls of each of the restricted passages 6 act as positive and negative electrodes 15, 16, respectively.

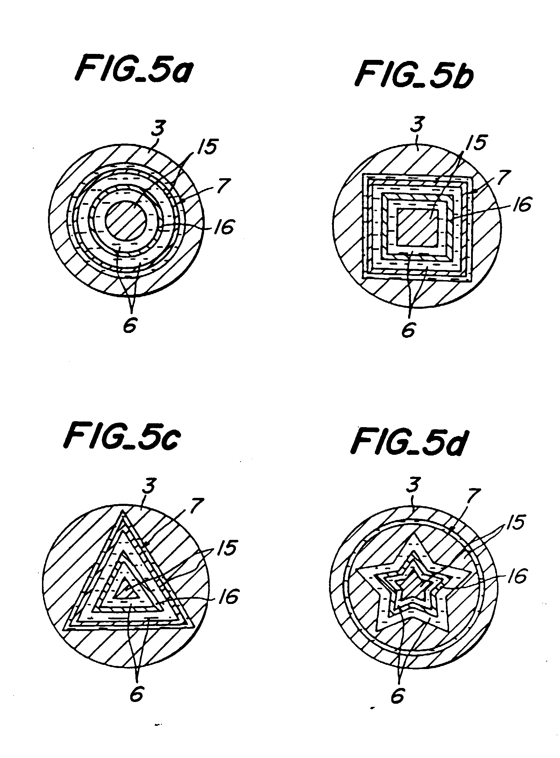

The formation of two restricted passages 6 in the connecting member 7 can be carried out by arranging an intermediate cylinder serving as a negative electrode 16 around a core member serving as a positive electrode 15 and further enclosing the intermediate cylinder with an outer cylinder serving as a positive electrode 15 as sectionally shown, for example, in Figs. 5a to 5d. Each of the thus formed restricted passages 6 has circular rectangular, triangular, star-shaped form or the like in accordance with the outer profiles of the cylinder and core member, and in which the flowing of the electrorheological fluid may be made through holes 13 formed in the intermediate cylinder and the outer cylinder.

Moreover, the restricted passage 6 may take polygonal shape, irregular shape or the like other than the above illustrated shapes and also the number of the restricted passages may be increased, if necessary.

In such a device, the total sectional area of the restricted passages can be sufficiently increased irrespective of the length of each restricted passage, so that the electrorheological fluid 14 can flow very smoothly in the restricted passages in the case of no electrical field and hence the damping performance against vibrations transmitted to the device can largely be reduced. On the other hand, when a given intensity value of electrical field is applied to each of the restricted passages 6 under the influence of the electrodes 15, 16, the viscosity of the electrorheological fluid 14 in the restricted passage 6 is increased as expected and a large flowing resistance is applied to the electrorheological fluid 14 likewise the case that the total length of the restricted passages is made long, whereby very high vibration damping performance can be developed.

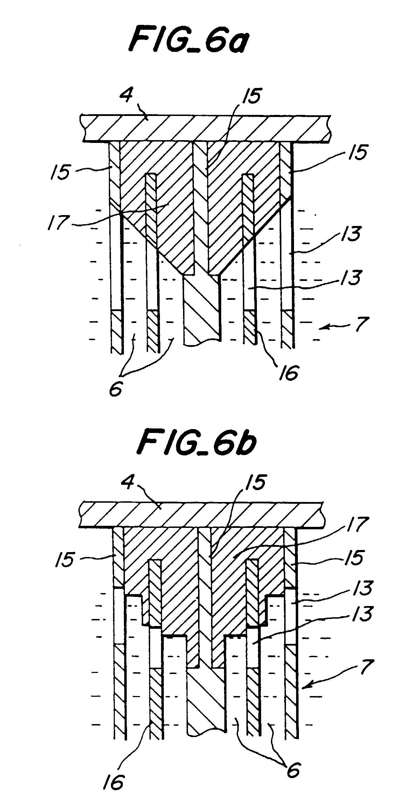

In Figs. 6a and 6b are shown preferred embodiments of the structure of the upper insulative material 17 in the above device. That is, the central portion of the insulative material 17 is protruded downward in a straight or step form in its section, whereby the distance of the surface of the insulative material 17 between the positive electrode 15 and the negative electrode 16 is made sufficiently long to effectively prevent electric discharge along the surface of the insulative material 17.

In addition, the upper edges of the holes 13 formed in the positive and negative electrodes 15, 16 are located at the same level as an edge position of the insulative material 17 or upward at a level higher than the said position for bringing about smooth discharge of air incorporated in the restricted passages toward the outside of the passages, whereby electric discharge through an air layer is sufficiently prevented.

Moreover, the prevention of electric discharge may be made more effective by applying the above structure to the lower insulative material 17.

In any case, the protruded shape of the insulative material 17 may variously be changed, if necessary.

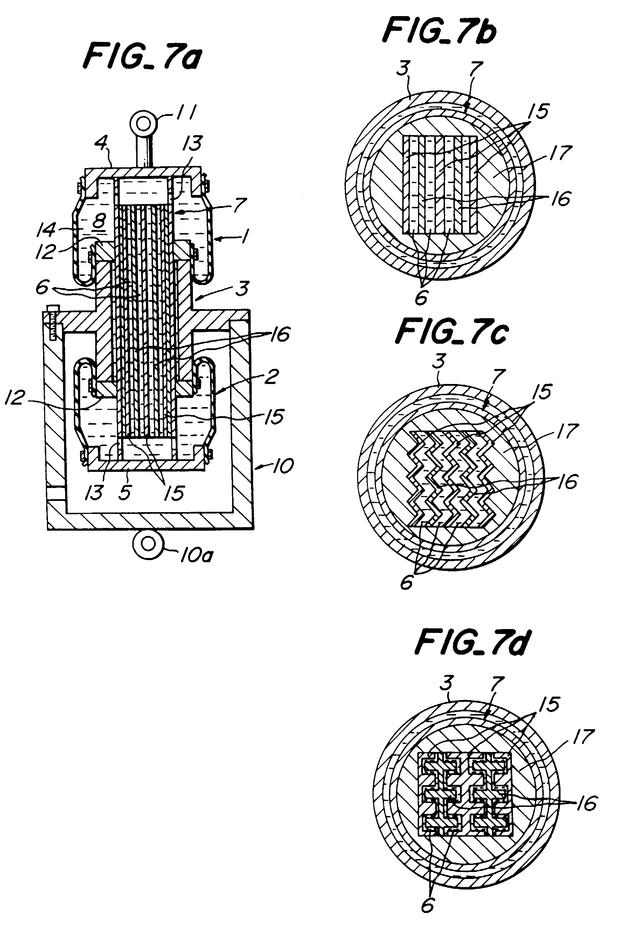

Fig. 7a shows a modified embodiment of the device shown in Fig. 4, in which plate members serving as positive and negative electrodes 15, 16 alternately extend inside the connecting member 7 in an axial direction of the connecting member 7 to form four restricted passages 6 having straight, zigzag or pulse shape viewed in lateral section. The same function and effect as in the previous embodiment can be achieved by such restricted passages.

In this case, it is preferable that each of the plate members contributing to the formation of the restricted passages 6 is fixed by the insulative material 17 enclosing these plate members as shown in Figs. 7b to 7d.

As mentioned above, according to the invention, when electrorheological fluid is utilized in the closed chamber, the vibration damping force can be decreased as far as possible in the case of no electrical field and very large vibration damping force can be developed in the case of a given intensity value of electrical field likewise the case that the total length of the restricted passages is long.

## Claims

1. A vibration damping device comprising two cylindrical and flexible membrane members (1,2), an end portion of each of which membrane members being liquid-tightly connected to respective end portions of a piston member (3) and the other end portions of which members being liquid-tightly connected to respective face plates (4,5), a connecting member (7) provided therein with at least one restricted passage (6) and connecting the face plates to each other to form a closed chamber (8) such that folded portions of the membrane members (1,2) face each other, an electrorheological fluid (14) filled in the closed chamber (8), electrodes (15,16) comprised by opposed walls of the restricted passage (6), and fastening members (10,11) arranged on the piston member (3) and one of said face plates, respectively.

2. A vibration damping device as claimed in claim 1, characterized in that the connecting member (7) is provided therein with a plurality of restricted passages (6), and in that the electrodes (15, 16) are comprised by opposed walls of each of the restricted passages (6).

3. A vibration damping device as claimed in claim 1 or 2, characterized in that said connecting member (7) for connecting the face plates (4, 5) to each other is arranged so as to pass through the piston member (3).

## Patentansprüche

1. Schwingungsdämpfungsvorrichtung, mit zwei zylindrischen, flexiblen Membranelementen (1, 2), wobei ein Endbereich von jedem der Membranelemente mit zugehörigen Endbereichen eines Kolbenelements (3) flüssigkeitsdicht verbunden ist, und die anderen Endbereiche dieser Membranelemente mit zugehörigen Stirnplatten (4, 5) flüssigkeitsdicht verbunden sind, einem Verbindungselement (7), das mit mindestens einem begrenzten Durchgang (6) versehen ist und die Stirnplatten miteinander verbindet, um eine geschlossene Kammer (8) zu bilden, und zwar auf eine solche Weise, daß die umgebogenen Bereiche der Membranelemente (1, 2) einander gegenüberliegen, einem elektrorheologischen Fluid (14), das in die geschlossene Kammer (8) eingefüllt ist, Elektroden (15, 16), die von den einander gegenüberliegenden Wänden des begrenzten Durchgangs (6) gebildet werden, und Befestigungselementen (10, 11), die auf dem Kolbenelement (3) bzw. einer der Stirnplatten angeordnet sind.

2. Schwingungsdämpfungsvorrichtung gemäß Anspruch 1, dadurch gekennzeichnet, daß das Verbindungselement (7) mit einer Vielzahl von begrenzten Durchgängen (6) versehen ist, und daß die Elektroden (15, 16) von den einander gegenüberliegenden Wänden von jedem der begrenzten Durchgänge (6) gebildet werden.

3. Schwingungsdämpfungsvorrichtung gemäß Anspruch 1 oder 2, dadurch gekennzeichnet, daß das Verbindungselement (7), das die Stirnplatten (4, 5) miteinander verbindet, so angeordnet ist, daß es durch das Kolbenelement (3) hindurchgeht.

## Revendications

1. Dispositif amortisseur de vibrations, comprenant deux éléments à membrane flexible et cylindrique (1, 2), une partie terminale de chacun desdits éléments à membrane étant connectée, de manière étanche aux liquides, aux parties terminales correspondantes d'un élément à piston (3) et les autres parties terminales de ces éléments étant connectées de manière étanche aux liquides aux plateaux correspondants (4, 5), un élément de connexion (7) étant disposé dans ceux-ci avec au moins un passage étranglé (6) et connectant les plateaux l'un à l'autre pour former une chambre fermée (8) telle que les parties repliées des éléments à membrane (1, 2) soient situées face à face, un fluide électrorhéologique (14) remplissant le chambre fermée (8), des électrodes (15, 16) constituées par les parois opposées du passage étranglé (6) et des organes de fixation (10, 11) disposés sur l'élément à piston (3) et l'un desdits plateaux respectivement.

2. Dispositif amortisseur de vibrations selon la revendication 1, caractérisé en ce que l'élément de connexion (7) est pourvu de plusieurs passages étranglés (6) et en ce que les électrodes (15, 16) sont constituées par les parois opposées de chacun des passages étranglés (6).

3. Dispositif d'amortisseur de vibrations selon la revendication 1 ou la revendication 2, caractérisé en ce que l'élément de connexion (7) destiné à connecter les plateaux (4, 5) l'un à l'autre est disposé de façon à traverser l'élément à piston (3).
